# FASCICULE DE BREVET EUROPEEN

(11) **EP 3 811 655 B1**
(45) Date de publication et mention de la délivrance du brevet: **10.09.2025**
(21) Numéro de dépôt: 19742873.3
(22) Date de dépôt: 21.06.2019
(51) Int. Cl.: H04L 43/08, H04L 43/20, H04W 24/08

(54) **PROCÉDÉ D'ÉVALUATION DE LA CONSOMMATION D'ÉNERGIE D'UNE TRANCHE SERVICE DANS UN RÉSEAU DE COMMUNICATIONS**
VERFAHREN ZUR BEURTEILUNG DES ENERGIEVERBRAUCHS EINER DIENSTEINHEIT IN EINEM KOMMUNIKATIONSNETZWERK
METHOD FOR EVALUATING THE ENERGY CONSUMPTION OF A SERVICE UNIT IN A COMMUNICATIONS NETWORK

(30) Priorité: 25.06.2018 FR 1855667
(43) Date de publication de la demande: 28.04.2021
(73) Titulaire: Orange, 92130 Issy-les-Moulineaux (FR)
(72) Inventeur: BEN JEMAA, Sana, 92326 Châtillon Cedex (FR); EL AYOUBI, Salah Eddine, 92326 Châtillon Cedex (FR)
(86) Numéro de dépôt international: PCT/FR2019/051525
(87) Numéro de publication internationale: WO 2020/002802

(56) Documents cités:
- AFOLABI IBRAHIM ET AL: "End-to-end network slicing enabled through network function virtualization", 2017 IEEE CONFERENCE ON STANDARDS FOR COMMUNICATIONS AND NETWORKING (CSCN), IEEE, 18 September 2017 (2017-09-18), pages 30 - 35, XP033241361, DOI: 10.1109/CSCN.2017.8088594
- "Environmental Engineering (EE); Measurement method for Energy efficiency of Network Function Virtualization (NFV) in laboratory environment", vol. TG EE EEPS EE Eco Environmental Product Standards, no. V0.0.7, 31 May 2018 (2018-05-31), pages 1 - 19, XP014312085, Retrieved from the Internet <URL:docbox.etsi.org/EE/EE-EEPS/70-Draft/EEPS19/EE-EEPS19v007.docx> [retrieved on 20180531]
- "Environmental Engineering (EE); Study on methods and metrics to evaluate energy efficiency for future 5G systems", vol. TG EE EEPS EE Eco Environmental Product Standards, no. V0.0.5, 21 November 2017 (2017-11-21), pages 1 - 19, XP014303353, Retrieved from the Internet <URL:docbox.etsi.org/EE/EE-EEPS/70-Draft/EEPS31/EE-EEPS31v005.docx> [retrieved on 20171121]
- "3rd Generation Partnership Project; Technical Specification Group Services and System Aspects; Telecommunication management; Study on system and functional aspects of energy efficiency in 5G networks (Release 15)", 3GPP STANDARD; TECHNICAL REPORT; 3GPP TR 32.972, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.5.0, 25 April 2018 (2018-04-25), pages 1 - 28, XP051451161
- CHAIRMAN ET AL: "FG IMT-2020: Report on Standards Gap Analysis", 12 June 2016 (2016-06-12), XP051110522, Retrieved from the Internet <URL:http://www.3gpp.org/ftp/Meetings_3GPP_SYNC/tsg_sa/SA/Docs/> [retrieved on 20160612]

## Description

La présente invention concerne la consommation d'énergie dans les réseaux de communication.

On connaît, par exemple sur la base de la norme ETSI ES 202 706-V1.4.1 intitulée *« Measurement method for power consumption and energy efficiency of wireless access network equipment »,* des procédés d'évaluation de la consommation d'énergie dans un réseau d'accès mobile. On connaît également, par exemple sur la base de l'article de W. Yoro et al. intitulé « Service-oriented sharing of energy in wireless access networks using Shapley value » (Computer Networks, 2017), des procédés d'évaluation de la consommation d'énergie dans les réseaux mobiles, service par service.

Ces procédés consistent à mesurer l'efficacité énergétique d'un service donné en fonction de l'intensité du trafic associé, en utilisant un modèle analytique de consommation d'énergie.

Par exemple dans les réseaux 5G, on considère essentiellement trois classes de services :
- « Enhanced Mobile Broadband (eMBB) » : il s'agit de services dans lesquels des utilisateurs bénéficient d'un accès amélioré à des contenus multimédia, à des services et à des données, avec des performances améliorées et une expérience utilisateur plus transparente ; ces cas d'usage présentent des caractéristiques variées, par exemple :
   - le cas d'usage d'un « hotspot » avec une haute densité d'utilisateurs, une capacité de trafic très élevée et une mobilité d'utilisateur relativement basse, ou
   - le cas d'usage d'une couverture de zone étendue avec une couverture de radio sans couture fournissant des débits de données très améliorés par rapport aux débits actuels, avec une mobilité d'utilisateur de moyenne à haute ;
- « Ultra-reliable and low latency communications (URLLC) » : il s'agit de services présentant des exigences rigoureuses en ce qui concerne des caractéristiques telle que le débit, la latence et la disponibilité ; on peut citer comme exemples le contrôle sans-fil de procédés industriels de fabrication ou de production, la chirurgie médicale à distance, l'automatisation de la distribution dans un réseau intelligent, ou la sécurité des transports ;
- « Massive machine type communications (MMTC) » : il s'agit de services caractérisés par un très grand nombre de dispositifs connectés, transmettant habituellement un volume relativement bas de données peu sensibles aux retards de transmission ; les dispositifs concernés doivent être peu coûteux et posséder une batterie de très grande autonomie.

Il est clair que si l'on considérait chaque classe de service séparément, et si l'on concevait un réseau 5G pour chacune de ces classes de service, il en résulterait des architectures de réseau d'accès très différentes entre elles ; or, la seule solution acceptable au plan économique et écologique est représentée par un réseau d'accès commun apte à fournir ces trois classes de services.

On notera par ailleurs que la technologie 5G est considérée non seulement comme une nouvelle architecture d'accès radio et de cœur de réseau, mais encore comme une plate-forme d'orchestration où des intégrateurs peuvent assembler des services spécialisés pour leurs clients ; cela permet de créer un grand nombre de services, qui appartiennent aux trois classes de services (eMBB, URLLC et mMTC) définies ci-dessus, mais avec une pléthore d'exigences.

Le concept de « tranche service » (*« slice »* en anglais) est alors apparu comme une façon efficace pour pouvoir mettre en place tous ces services dans une infrastructure commune.

Une tranche service est définie comme étant un réseau virtuel construit sur une infrastructure matérielle. La technique du découpage en tranches service (*« slicing »* en anglais) consiste à définir un certain nombre de tranches service exploitant la même infrastructure matérielle. Selon les normes Y.3011 et Y.3012 de l'ITU-T, le découpage en tranches service permet des divisions de réseau logiquement isolées, dans lesquelles une tranche service constitue une unité de ressources programmables, telles que les capacités sans-fil et filaire, le calcul et le stockage. Selon la norme TR 22.891 de la 3GPP, une tranche service est associée au service de communication d'un type de connexion particulier avec une façon spécifique de traiter les plans de contrôle et d'utilisateur pour ce service ; à cette fin, une tranche service 5G est composée d'un ensemble de fonctions de réseau 5G et de réglages de réseau d'accès spécifiques, qui sont combinés pour un cas d'usage ou un modèle économique spécifique. Le découpage en tranches service est principalement associé à des segments différents du marché correspondant à des domaines d'affaires différents, comme les services médicaux, le transport, les villes, l'agriculture, l'industrie, l'automobile, la vente au détail grand-public, le bâtiment, l'énergie, la logistique, ou les banques.

Une tranche service peut décrire un système de bout en bout, c'est-à-dire que ses fonctionnalités peuvent couvrir à la fois le réseau cœur et le réseau d'accès. Une tranche service peut être vue comme un réseau indépendant, avec les avantages associés tels que la sécurité et la garantie de l'Accord de Niveau de Service (*« Service Level Agreement »,* ou SLA en anglais). Cependant, par contraste avec le déploiement d'infrastructures de réseau indépendantes dans les précédentes générations de réseaux radio mobiles, les tranches service peuvent être réalisées, complètement ou partiellement, sur une couche d'infrastructure commune, fournissant des ressources comme le spectre de fréquences. Par conséquent, un des défis principaux dans la mise en œuvre du concept de tranche service consiste dans la conception et la gestion de plusieurs tranches sur la même infrastructure partagée ou les mêmes ressources d'une façon efficace, en garantissant le SLA pour chacune de ces tranches service.

Le concept de tranche service aide donc à la mise en place de ces services d'une façon flexible et dynamique, et aide à assurer des performances de bout en bout.

On peut associer à chaque tranche service d'un réseau de communications des indicateurs de performance spécifiques, comme la Qualité de Service (*« Quality of Service* »*,* ou QoS, en anglais) liée à des caractéristiques telles que le débit ou la latence. La présente invention concerne, plus particulièrement, l'indicateur de performance lié à la consommation d'énergie d'une tranche service.

Alors que les indicateurs de performance relatifs à la QoS peuvent être mesurés au niveau des paquets ou des flots de paquets, l'indicateur de performance relatif à la mesure de la consommation d'énergie est plus problématique, car cette dernière est liée à l'infrastructure, laquelle est partagée entre les différentes tranches service. La consommation d'énergie induite par une tranche service ne dépend donc pas seulement du trafic relatif à la tranche service en question, mais aussi des autres tranches service et des autres services partageant la même infrastructure. Ainsi, une tranche service déployée seule, par exemple sur une station de base, n'induira pas la même consommation d'énergie lorsqu'elle sera déployée en même temps qu'une autre tranche service.

De plus, les procédés classiques d'évaluation de la consommation d'énergie, tels que ceux mentionnés ci-dessus, sont difficilement applicables aux tranches service, compte tenu de la grande variété présentée par les tranches service en termes de caractéristiques de trafic, de QoS cible et de couverture, mais aussi de la complexité des technologies de multiplexage de ces tranches service au niveau de l'infrastructure (différentes numérologies, différentes structures de canaux de contrôle, utilisation ou non d'antennes multiples à l'émission et/ou à la réception, et ainsi de suite).

La présente invention concerne donc un procédé d'évaluation de la consommation d'énergie d'une première tranche service d'une ralité de tranches service partageant une infrastructure d'un réseau de communications, ite première tranche service étant déployée, ou destinée à être déployée, de bout en bout, sur ladite infrastructure. Ledit procédé comprend les étapes suivantes :
a) on détermine la consommation d'énergie W_no mesurée sur ladite infrastructure en l'absence de ladite première tranche service,
b) on détermine la consommation d'énergie W_yes mesurée sur ladite infrastructure en présence de ladite première tranche service, et
c) on obtient la consommation d'énergie induite par le déploiement de ladite première tranche service en calculant la différence (W_yes - W_no).

Naturellement, on peut inverser l'ordre des étapes a) et b), ou déterminer d'abord les deux classes avant de déterminer leurs consommations d'énergie respectives.

Ainsi, la présente invention propose un procédé pour évaluer la consommation d'énergie induite par une tranche service sur une infrastructure donnée (par exemple, un site radio) et dans un contexte donné (tranches service coexistant sur une infrastructure donnée, un environnement radio donné, et ainsi de suite). Selon l'invention, on évalue de manière pragmatique la part de consommation d'une tranche service sur un équipement d'infrastructure par comparaison à d'autres équipements ayant des caractéristiques similaires mais ne déployant pas la tranche service en question : on tient ainsi compte du fait que, comme expliqué ci-dessus, la part de consommation d'une tranche service n'est pas nécessairement la même lorsque cette tranche service est déployée seule, et lorsque cette tranche service partage les ressources radio avec d'autres tranches service.

Grâce à ces dispositions, un intégrateur ou un opérateur réseau peut estimer le coût énergétique lié au déploiement d'une nouvelle tranche service. Par ailleurs, un client bénéficiant d'une tranche service peut ainsi connaître la consommation d'énergie de cette tranche service.

Selon des caractéristiques particulières, ledit procédé comprend une phase préliminaire, au cours de laquelle on construit une base de données indiquant une consommation d'énergie mesurée respective pour un ensemble de classes respectives d'infrastructures, et :
- lors de ladite étape a), on identifie la classe C_no à laquelle appartient ladite infrastructure en l'absence de ladite tranche service, et l'on lit dans ladite base de données la consommation d'énergie W_no enregistrée pour ladite classe C_no, et
- lors de ladite étape b), on identifie la classe C_yes à laquelle appartient ladite infrastructure en présence de ladite tranche service, et l'on lit dans ladite base de données la consommation d'énergie W_yes enregistrée pour ladite classe C_yes.

Grâce à ces dispositions, on peut aisément déterminer la consommation d'énergie associée à toute infrastructure donnée appartenant à un ensemble d'infrastructures préalablement entrées dans ladite base de données.

Selon des caractéristiques encore plus particulières, la construction de ladite base de données comprend les étapes suivantes :
- on détermine un certain nombre de classes en classifiant diverses infrastructures sur la base de caractéristiques techniques choisies de ces infrastructures, et
- on détermine, sur la base de mesures, une consommation d'énergie pour chacune desdites classes déterminées.

Cette première variante présente l'avantage qu'elle est simple à mettre en œuvre. Mais elle a pour inconvénient que l'on doit veiller en parallèle à ne pas mettre dans la même classe des sites radio ayant éventuellement des consommations d'énergie très différentes.

Selon d'autres caractéristiques encore plus particulières :
- on mesure la consommation d'énergie pour un certain nombre d'infrastructures, et l'on génère des classes de sites radio homogènes sur le plan de la consommation d'énergie, et
- on élabore un modèle reliant les caractéristiques techniques desdites infrastructures à leur consommation d'énergie, et donc à une classe correspondante.

Cette deuxième variante est plus complexe à mettre en œuvre que la première variante, mais elle fournit automatiquement des classes homogènes en termes de consommation d'énergie.

Corrélativement, l'invention concerne un système pour évaluer la consommation d'énergie d'une tranche service déployée, ou destinée à être déployée, sur une infrastructure donnée d'un réseau de communications. Ledit système comprend des moyens pour :
- déterminer la consommation d'énergie W_no mesurée sur ladite infrastructure en l'absence de ladite tranche service,
- déterminer la consommation d'énergie W_yes mesurée sur ladite infrastructure en présence de ladite tranche service, et
- obtenir la consommation d'énergie induite par le déploiement de ladite tranche service en calculant la différence (W_yes - W_no).

Selon des caractéristiques particulières, ledit système comprend en outre des moyens pour construire une base de données indiquant une consommation d'énergie mesurée respective pour un ensemble de classes respectives d'infrastructures, ainsi que des moyens pour :
- identifier la classe C_no à laquelle appartient ladite infrastructure en l'absence de ladite tranche service, et lire dans ladite base de données la consommation d'énergie W_no enregistrée pour ladite classe C_no, et
- identifier la classe C_yes à laquelle appartient ladite infrastructure en présence de ladite tranche service, et lire dans ladite base de données la consommation d'énergie W_yes enregistrée pour ladite classe C_yes.

Selon des caractéristiques encore plus particulières, pour construire ladite base de données, ledit système comprend en outre des moyens pour :
- déterminer un certain nombre de classes en classifiant diverses infrastructures sur la base de caractéristiques techniques choisies de ces infrastructures, et
- déterminer, sur la base de mesures, une consommation d'énergie pour chacune desdites classes déterminées.

Selon d'autres caractéristiques encore plus particulières, pour construire ladite base de données, ledit système comprend en outre des moyens pour :
- mesurer la consommation d'énergie pour un certain nombre d'infrastructures, et générer des classes de sites radio homogènes sur le plan de la consommation d'énergie, et
- élaborer un modèle reliant les caractéristiques techniques desdites infrastructures à leur consommation d'énergie, et donc à une classe correspondante.

Les avantages offerts par ces systèmes sont essentiellement les mêmes que ceux offerts par les procédés corrélatifs succinctement exposés ci-dessus.

Ledit système pour évaluer la consommation d'énergie d'une tranche service peut avantageusement comprendre au moins une entité de gestion de tranches service hébergée dans un nœud de réseau d'accès, dans un nœud de cœur de réseau, ou dans un centre opérationnel, d'administration et d'entretien (OAM) dudit réseau de communications.

On notera que ladite entité de gestion de tranches service peut être physique ou virtuelle, et qu'il est possible de la réaliser dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé d'évaluation de la consommation d'énergie succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs.

On va décrire à présent un mode de réalisation du procédé d'évaluation de la consommation d'énergie d'une tranche service selon l'invention.

Ce mode de réalisation comprend une phase préliminaire, au cours de laquelle on construit une base de données indiquant une consommation d'énergie mesurée respective pour un ensemble de classes respectives d'infrastructures. De manière non-limitative, on prendra comme exemple d'infrastructure un site radio, tel qu'une station de base d'un réseau cellulaire.

Selon une première variante, cette construction met en œuvre les étapes suivantes.

Lors d'une étape EP-1, on classifie divers sites radio en prenant en compte certaines caractéristiques techniques choisies, telles que :
- la puissance d'émission, la couverture, le nombre d'antennes à l'émission et à la réception, ou la bande de fréquences utilisée,
- l'environnement radio, par exemple rural ou urbain, ou
- l'état du trafic, par exemple les types de tranches service actives, leurs niveaux de trafic, ou le niveau d'interférences mesuré.

Naturellement, d'autres facteurs peuvent être pris en compte aux fins de cette classification.

Lors d'une étape EP-2, on détermine, sur la base de mesures, une consommation d'énergie pour chacune des classes déterminées à l'étape EP-1.

Enfin, lors d'une étape EP-3, on construit ladite base de données en conséquence.

Selon une deuxième variante, cette construction met en œuvre les étapes suivantes.

Lors d'une étape EP'-1, on mesure d'abord la consommation d'énergie pour un certain nombre de sites radio, puis l'on génère des classes de sites radio homogènes sur le plan de la consommation d'énergie.

Lors d'une étape EP'-2, on élabore un modèle qui relie les caractéristiques des sites radio à leur consommation d'énergie, et donc à une classe correspondante.

Enfin, lors d'une étape EP'-3, on construit ladite base de données en conséquence.

Pour mettre en œuvre cette deuxième variante, et construire un modèle liant les caractéristiques d'un site radio à sa classe de consommation d'énergie, on pourra commodément faire appel à des techniques connues de traitement statistique des données, ainsi qu'à des techniques d'intelligence artificielle, comme le partitionnement des données (« *data clustering »* en anglais), en particulier le partitionnement en k-moyennes ou la classification supervisée. On rappelle à cet égard que le partitionnement en k-moyennes (*« k-means clustering »* en anglais) est une méthode de partitionnement de données et d'optimisation combinatoire, dans laquelle on subdivise un ensemble d'éléments en k sous-ensembles (« *clusters »* en anglais), de façon à minimiser une certaine fonction.

Ces techniques peuvent par exemple utiliser des réseaux de neurones, ou des classifieurs bayésiens naïfs. On rappelle à cet égard que la classification naïve bayésienne construit des modèles associés à des caractéristiques supposées statistiquement indépendantes.

Lorsque l'on souhaite, suite à cette phase préliminaire, évaluer la consommation d'énergie d'une tranche service donnée S sur une infrastructure donnée, on met en œuvre les étapes suivantes.

Selon une étape EA-1, on identifie la classe C_no à laquelle appartient ladite infrastructure en l'absence de la tranche service S, et l'on lit dans ladite base de données la consommation d'énergie correspondante W_no.

Selon une étape EA-2, on identifie la classe C_yes à laquelle appartient ladite infrastructure en présence de la tranche service S, et l'on lit dans ladite base de données la consommation d'énergie correspondante W_yes.

Naturellement, on peut aussi bien, en variante, déterminer d'abord lesdites classes lors d'une première étape, puis leurs consommations d'énergie respectives lors d'une deuxième étape.

Enfin, selon une étape EA-3, on obtient la consommation d'énergie due spécifiquement au déploiement de la tranche service S en calculant la différence (W_yes - W_no).

Le système de gestion de tranches service selon l'invention peut être mis en œuvre, au moyen de composants logiciels et/ou matériels, au sein d'une ou de plusieurs entités de gestion de tranches service hébergées dans des nœuds d'un réseau de communication, tels que des nœuds d'un réseau d'accès, par exemple dans le nuage (*« cloud RAN* » en anglais), ou des nœuds d'un réseau cœur. Une telle entité de gestion de tranches service peut aussi être déployée en tant que module spécifique dans un centre opérationnel, d'administration et d'entretien (*« Operations, Administration and Maintenance »,* ou OAM en anglais) du réseau (ou un équivalent) ; on rappelle à cet égard qu'un OAM est un centre responsable, de manière classique, de la collection et de l'archivage de mesures de performance.

Lesdits composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés d'évaluation de la consommation d'énergie selon l'invention.

En effet, l'invention vise aussi un programme d'ordinateur téléchargeable depuis un réseau de communication comprenant des instructions pour l'exécution des étapes d'un procédé d'évaluation de la consommation d'énergie selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive »* en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés d'évaluation de la consommation d'énergie selon l'invention.

## Revendications

1. Procédé d'évaluation de la consommation d'énergie d'une première tranche service d'une pluralité de tranches service partageant une infrastructure d'un réseau de communications , ladite première tranche service étant déployée, ou destinée à être déployée, de bout en bout sur ladite infrastructure, ledit procédé comprenant :
a) on détermine la consommation d'énergie W_no mesurée sur ladite infrastructure en l'absence de ladite première tranche service,
b) on détermine la consommation d'énergie W_yes mesurée sur ladite infrastructure en présence de ladite première tranche service, et
c) on obtient la consommation d'énergie induite par le déploiement de ladite première tranche service en calculant la différence (W_yes - W_no).

2. Procédé d'évaluation selon la revendication 1, **caractérisé en ce qu'**il comprend une phase préliminaire, au cours de laquelle on construit une base de données indiquant une consommation d'énergie mesurée respective pour un ensemble de classes respectives d'infrastructures, et **en ce que** :
- lors de ladite étape a), on identifie la classe C_no à laquelle appartient ladite infrastructure en l'absence de ladite première tranche service, et l'on lit dans ladite base de données la consommation d'énergie W_no enregistrée pour ladite classe C_no, et
- lors de ladite étape b), on identifie la classe C_yes à laquelle appartient ladite infrastructure en présence de ladite première tranche service, et l'on lit dans ladite base de données la consommation d'énergie W_yes enregistrée pour ladite classe C_yes.

3. Procédé d'évaluation selon la revendication 2, **caractérisé en ce que** la construction de ladite base de données comprend les étapes suivantes :
- on détermine un certain nombre de classes en classifiant diverses infrastructures sur la base de caractéristiques techniques choisies de ces infrastructures, et
- on détermine, sur la base de mesures, une consommation d'énergie pour chacune desdites classes déterminées.

4. Procédé d'évaluation selon la revendication 2, **caractérisé en ce que** la construction de ladite base de données comprend les étapes suivantes :
- on mesure la consommation d'énergie pour un certain nombre d'infrastructures, et l'on génère des classes de sites radio homogènes sur le plan de la consommation d'énergie, et
- on élabore un modèle reliant les caractéristiques techniques desdites infrastructures à leur consommation d'énergie, et donc à une classe correspondante.

5. Système pour évaluer la consommation d'énergie d'une première tranche service d'une pluralité de tranches service partageant une infrastructure d'un réseau de communications, ladite première tranche service étant déployée, ou destinée à être déployée, de bout en bout sur ladite infrastructure, ledit système comprenant des moyens pour :
- déterminer la consommation d'énergie W_no mesurée sur ladite infrastructure en l'absence de ladite première tranche service,
- déterminer la consommation d'énergie W_yes mesurée sur ladite infrastructure en présence de ladite première tranche service, et
- obtenir la consommation d'énergie induite par le déploiement de ladite première tranche service en calculant la différence (W_yes - W_no).

6. Système selon la revendication 5, **caractérisé en ce qu'**il comprend en outre des moyens pour construire une base de données indiquant une consommation d'énergie mesurée respective pour un ensemble de classes respectives d'infrastructures, ainsi que des moyens pour :
- identifier la classe C_no à laquelle appartient ladite infrastructure en l'absence de ladite première tranche service, et lire dans ladite base de données la consommation d'énergie W_no enregistrée pour ladite classe C_no, et
- identifier la classe C_yes à laquelle appartient ladite infrastructure en présence de ladite première tranche service, et lire dans ladite base de données la consommation d'énergie W_yes enregistrée pour ladite classe C_yes.

7. Système selon la revendication 6, **caractérisé en ce que**, pour construire ladite base de données, il comprend en outre des moyens pour :
- déterminer un certain nombre de classes en classifiant diverses infrastructures sur la base de caractéristiques techniques choisies de ces infrastructures, et
- déterminer, sur la base de mesures, une consommation d'énergie pour chacune desdites classes déterminées.

8. Système selon revendication 6, caractérisé en ce **caractérisé en ce que**, pour construire ladite base de données, il comprend en outre des moyens pour:
- mesurer la consommation d'énergie pour un certain nombre d'infrastructures, et générer des classes de sites radio homogènes sur le plan de la consommation d'énergie, et
- élaborer un modèle reliant les caractéristiques techniques desdites infrastructures à leur consommation d'énergie, et donc à une classe correspondante.

9. Système selon l'une quelconque des revendications 5 à 8, **caractérisé en ce qu'**il comprend au moins une entité de gestion de tranches service hébergée dans un nœud de réseau d'accès, dans un nœud de cœur de réseau, ou dans un centre opérationnel, d'administration et d'entretien (OAM) dudit réseau de communications.

10. Moyen de stockage de données inamovible, ou partiellement ou totalement amovible, comportant des instructions de code de programme informatique pour l'exécution des étapes d'un procédé d'évaluation de la consommation d'énergie d'une première tranche service selon l'une quelconque des revendications 1 à 4.

11. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'évaluation de la consommation d'énergie d'une première tranche service selon l'une quelconque des revendications 1 à 4, lorsqu'il est exécuté sur un ordinateur.

## Patentansprüche

1. Verfahren zur Beurteilung des Energieverbrauchs einer ersten Dienst-Slice einer Mehrzahl von Dienst-Slices, die eine Infrastruktur eines Kommunikationsnetzes teilen, wobei die erste Dienst-Slice in der Infrastruktur von Ende zu Ende implementiert ist oder dazu bestimmt ist, implementiert zu werden, das Verfahren umfassend:
a) Bestimmen des Energieverbrauchs W_no, der an der Infrastruktur in Abwesenheit der ersten Dienst-Slice gemessen wird,
b) Bestimmen des Energieverbrauchs W_yes, der an der Infrastruktur in Anwesenheit der ersten Dienst-Slice gemessen wird, und
c) Erhalten des durch die Implementierung der ersten Dienst-Slice bewirkten Energieverbrauchs, indem die Differenz (W_yes - W_no) berechnet wird.

2. Verfahren zur Beurteilung nach Anspruch 1, **dadurch gekennzeichnet, dass** es eine Vorabphase umfasst, während der eine Datenbank aufgebaut wird, die einen jeweiligen gemessenen Energieverbrauch für eine Menge von jeweiligen Infrastrukturklassen angibt, und dass:
- bei dem Schritt a) die Klasse C_no ermittelt wird, der die Infrastruktur in Abwesenheit der ersten Dienst-Slice angehört, und in der Datenbank der Energieverbrauch W_no abgelesen wird, der für die Klasse C_no gespeichert ist, und
- bei dem Schritt b) die Klasse C_yes ermittelt wird, der die Infrastruktur in Anwesenheit der ersten Dienst-Slice angehört, und in der Datenbank den Energieverbrauch W_yes abgelesen wird, der für die Klasse C_yes gespeichert ist.

3. Verfahren zur Beurteilung nach Anspruch 2, **dadurch gekennzeichnet, dass** das Aufbauen der Datenbank die folgenden Schritte umfasst:
- Bestimmen einer gewissen Anzahl von Klassen, indem verschiedene Infrastrukturen auf der Grundlage von ausgewählten technischen Merkmalen dieser Infrastruktur klassifiziert werden, und
- Bestimmen, auf der Grundlage von Messungen, eines Energieverbrauchs für jede der bestimmten Klassen.

4. Verfahren zur Beurteilung nach Anspruch 2, **dadurch gekennzeichnet, dass** das Aufbauen der Datenbank die folgenden Schritte umfasst:
- Messen des Energieverbrauchs für eine gewisse Anzahl von Infrastrukturen und Erzeugen von auf Ebene des Energieverbrauchs einheitlichen Funkstandortklassen, und
- Erarbeiten eines Modells, das die technischen Merkmale der Infrastrukturen mit ihrem Energieverbrauch und somit mit einer entsprechenden Klasse verknüpft.

5. System zum Beurteilen des Energieverbrauchs einer ersten Dienst-Slice einer Mehrzahl von Dienst-Slices, die eine Infrastruktur eines Kommunikationsnetzes teilen, wobei die erste Dienst-Slice in der Infrastruktur von Ende zu Ende implementiert ist oder dazu bestimmt ist, implementiert zu werden, wobei das System Mittel umfasst zum:
- Bestimmen des Energieverbrauchs W_no, der an der Infrastruktur in Abwesenheit der ersten Dienst-Slice gemessen wird,
- Bestimmen des Energieverbrauchs W_yes, der an der Infrastruktur in Anwesenheit der ersten Dienst-Slice gemessen wird, und
- Erhalten des durch die Implementierung der ersten Dienst-Slice bewirkten Energieverbrauchs, indem die Differenz (W_yes - W_no) berechnet wird.

6. System nach Anspruch 5, **dadurch gekennzeichnet, dass** es ferner Mittel zum Aufbauen einer Datenbank umfasst, die einen jeweiligen gemessenen Energieverbrauch für eine Menge von jeweiligen Infrastrukturklassen angibt, sowie Mittel, um:
- die Klasse C_no zu ermitteln, der die Infrastruktur in Abwesenheit der ersten Dienst-Slice angehört, und in der Datenbank den Energieverbrauch W_no abzulesen, der für die Klasse C_no gespeichert ist, und
- die Klasse C_yes zu ermitteln, der die Infrastruktur in Anwesenheit der ersten Dienst-Slice angehört, und in der Datenbank den Energieverbrauch W_yes abzulesen, der für die Klasse C_yes gespeichert ist.

7. System nach Anspruch 6, **dadurch gekennzeichnet, dass** es zum Aufbauen der Datenbank ferner Mittel umfasst, um:
- eine gewisse Anzahl von Klassen zu bestimmen, indem verschiedene Infrastrukturen auf der Grundlage von ausgewählten technischen Merkmalen dieser Infrastruktur klassifiziert werden, und
- auf der Grundlage von Messungen einen Energieverbrauch für jede der bestimmten Klassen zu bestimmen.

8. System nach Anspruch 6, **dadurch gekennzeichnet, dass** es zum Aufbauen der Datenbank ferner Mittel umfasst, um:
- den Energieverbrauch für eine gewisse Anzahl von Infrastrukturen zu messen und Funkstandortklassen zu erzeugen, die auf Ebene des Energieverbrauchs einheitlich sind, und
- ein Modell zu erarbeiten, das die technischen Merkmale der Infrastrukturen mit ihrem Energieverbrauch und somit mit einer entsprechenden Klasse verknüpft.

9. System nach einem der Ansprüche 5 bis 8, **dadurch gekennzeichnet, dass** es mindestens eine Entität zur Verwaltung von Dienst-Slices umfasst, die in einem Zugangsnetzknoten, in einem Netzkernknoten oder in einem Betriebs-, Administrations- und Instandhaltungszentrum (OAM) des Kommunikationsnetzes untergebracht ist.

10. Nicht entnehmbares oder teilweise oder vollständig entnehmbares Datenspeichermedium, das Computerprogrammcodeanweisungen zum Ausführen der Schritte eines Verfahrens zur Beurteilung des Energieverbrauchs einer ersten Dienst-Slice nach einem der Ansprüche 1 bis 4 beinhaltet.

11. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Verfahrens zur Beurteilung des Energieverbrauchs einer ersten Dienst-Slice nach einem der Ansprüche 1 bis 4 ausführen.

## Claims

1. Method for evaluating the energy consumption of a first service slice of a plurality of service slices sharing an infrastructure of a communications network, said first service slice being deployed, or intended to be deployed, end-to-end on said infrastructure, said method comprising:
a) determining the energy consumption W_no measured on said infrastructure in the absence of said first service slice;
b) determining the energy consumption W_yes measured on said infrastructure in the presence of said first service slice; and
c) obtaining the energy consumption caused by the deployment of said first service slice by calculating the difference (W_yes - W_no).

2. Evaluation method according to Claim 1, **characterized in that** it comprises a preliminary phase, during which a database is constructed which indicates a respective measured energy consumption for a set of respective infrastructure classes, and **in that**:
- in said step a), the class C_no to which said infrastructure belongs in the absence of said first service slice is identified, and the energy consumption W_no recorded for said class C_no is read from said database; and
- in said step b), the class C_yes to which said infrastructure belongs in the presence of said first service slice is identified, and the energy consumption W_yes recorded for said class C_yes is read from said database.

3. Evaluation method according to Claim 2, **characterized in that** the construction of said database comprises the following steps:
- determining a certain number of classes by classifying various infrastructures on the basis of selected technical characteristics of these infrastructures; and
- determining, on the basis of measurements, an energy consumption for each of said determined classes.

4. Evaluation method according to Claim 2, **characterized in that** the construction of said database comprises the following steps:
- measuring the energy consumption for a certain number of infrastructures, and generating radio site classes that are homogeneous in terms of energy consumption; and
- developing a model linking the technical characteristics of said infrastructures to their energy consumption, and therefore to a corresponding class.

5. System for evaluating the energy consumption of a first service slice of a plurality of service slices sharing an infrastructure of a communications network, said first service slice being deployed, or intended to be deployed, end-to-end on said infrastructure, said system comprising means for:
- determining the energy consumption W_no measured on said infrastructure in the absence of said first service slice;
- determining the energy consumption W_yes measured on said infrastructure in the presence of said first service slice; and
- obtaining the energy consumption caused by the deployment of said first service slice by calculating the difference (W_yes - W_no).

6. System according to Claim 5, **characterized in that** it further comprises means for constructing a database indicating a respective measured energy consumption for a set of respective infrastructure classes, and means for:
- identifying the class C_no to which said infrastructure belongs in the absence of said first service slice, and reading from said database the energy consumption W_no recorded for said class C_no; and
- identifying the class C_yes to which said infrastructure belongs in the presence of said first service slice, and reading from said database the energy consumption W_yes recorded for said class C_yes.

7. System according to Claim 6, **characterized in that**, in order to construct said database, it further comprises means for:
- determining a certain number of classes by classifying various infrastructures on the basis of selected technical characteristics of these infrastructures; and
- determining, on the basis of measurements, an energy consumption for each of said determined classes.

8. System according to Claim 6, **characterized in that**, in order to construct said database, it further comprises means for:
- measuring the energy consumption for a certain number of infrastructures, and generating radio site classes that are homogeneous in terms of energy consumption; and
- developing a model linking the technical characteristics of said infrastructures to their energy consumption, and therefore to a corresponding class.

9. System according to any one of Claims 5 to 8, **characterized in that** it comprises at least one entity for managing service slices that is hosted in an access network node, in a core network node, or in an operations, administration and maintenance (OAM) centre of said communications network.

10. Non-removable, or partially or fully removable, data storage means comprising computer program code instructions for the execution of the steps of a method for evaluating the energy consumption of a first service slice according to any one of Claims 1 to 4.

11. Computer program that can be downloaded from a communication network and/or is stored on a computer-readable medium and/or is able to be executed by a microprocessor, **characterized in that** it comprises instructions for the execution of the steps of a method for evaluating the energy consumption of a first service slice according to any one of Claims 1 to 4 when it is executed on a computer.
